# EUROPEAN PATENT APPLICATION

(11) **EP 4 597 396 A1**
(43) Date of publication of application: **06.08.2025**
(21) Application number: 24305160.4
(22) Date of filing: 30.01.2024
(51) Int. Cl.: G06Q 20/34, G06F 21/35, G07F 7/08

(54) **PROXIMITY DEVICE AND METHOD FOR MANAGING A TRANSACTION INVOLVING A PROXIMITY DEVICE**

(71) Applicant: THALES DIS FRANCE SAS, 92190 Meudon (FR)
(72) Inventor: FAVREAU, Valentin, 92130 Issy-les-Moulineaux (FR); OUNG, Richard, 94420 Le Plessis-Trévise (FR); CHUA, Jun Ping Bryan, 92100 Boulogne-Billancourt (FR); DUCHER, Valerie, 94200 Ivry-sur-Seine (FR)
(74) Representative: Grevin, Emmanuel

(57) **Abstract**

The invention is a proximity device (10) devoid of electrical battery and comprising a contactless interface (12) able to communicate through a contactless channel with a contactless reader to conduct a transaction. The device requires a first level (15) of power supply to conduct said transaction. The device comprises a detector unit (16) that assesses a power level of energy harvested by the contactless interface from an electromagnetic field generated by the contactless reader. The device comprises an information unit (17) configured that provides feedback (63) to a user (50) of the device. Once the device is informed that the transaction needs to be conducted, the detector unit (16) triggers the information unit (17) to issue said feedback as long as the power level reaches the first level (15) of power supply.

## Description

### (Field of the invention)

The present invention relates to proximity communication devices and methods for managing transactions involving such proximity devices. It relates particularly to proximity communication devices which need to harvest energy from an external source.

### (Background of the invention)

Nowadays, phones can power a Near Field Communication (NFC) device like an NFC smart card, but the antenna of a phone is generally less powerful than one of a Point of Sale (POS) terminal. An NFC card need to be placed in the right place relative to the contactless reader integrated in the phone so that it can get enough power from the electromagnetic field generated by the NFC antenna phone.

Knowing correct place/position on the phone is not easy because the location of the NFC antenna varies from one model (or brand) of phone to another. After some practice, a user may know the optimal position for their own phone or POS terminal. However, other users may be required to put their NFC card on the phone/POS terminal belonging to another person, and the issue of the correct place remains for these other users.

Several solutions have been proposed to guide users to place an NFC device near a contactless reader.

The document US2021/0021305 A1 describes a method for guiding card positioning using phone sensors. The phone captures pictures to check if the card is placed in a predefined spatial volume.

The document US10277494 B2 discloses a method for antenna alignment using vibrational positioning.

The document US20200327533 A1 discloses a system that displays an image on the screen of the phone to guide the user to place the card at a relevant position.

### (Summary of the Invention)

According to the known methods, the NFC apparatus embedding the contactless reader evaluates whether the NFC card is correctly placed compared with predefined position data. All these methods require that the contactless reader be specifically adapted and customized with their own antenna positioning characteristics.

Updating contactless readers embedded in large parks of phones or terminals is expensive, time-consuming, and complex.

There is a need to enhance guiding users to place an NFC device near a contactless reader without requiring contactless readers to be modified.

The invention aims at solving the above-mentioned technical problem.

An object of the present invention is a proximity communication device able to conduct a first transaction with a contactless reader. The proximity communication device is devoid of electrical battery and comprises a contactless interface able to communicate through a contactless channel with the contactless reader. The proximity communication device requires a first level of power supply to conduct the first transaction. The proximity device comprises a detector unit which is configured to assess a power level of energy harvested by the contactless interface from the electromagnetic field generated by the contactless reader. The proximity device comprises an information unit configured to provide feedback to a user of the proximity device. Once the proximity device is informed that the first transaction needs to be conducted, the detector unit is configured to trigger the information unit to issue said feedback as long as the power level reaches the first level of power supply.

Advantageously, the proximity device may require a second level of power supply, different from said first level of power supply, to conduct a second transaction different from said first transaction. Once the proximity device is informed that said second transaction needs to be conducted, the detector unit may be configured to trigger the information unit to issue said feedback as long as the power level reaches said second level of power supply.

Advantageously, the device may be configured to receive an informative data sent by the contactless reader during said first transaction and, by analyzing said informative data, to deduce that said second transaction needs to be conducted.

Advantageously, the detector unit may be configured to repeatedly assess the power level of energy harvested by the contactless interface and to disable the information unit as soon as said power level falls below a preset threshold.

Advantageously, the device may embed a physical user interface and the information unit may be configured to activate the physical user interface to trigger the emission of a visual, audible or vibration signal for providing said feedback to the user.

Advantageously, the device may have a body comprising a peripheral edge and the physical user interface may be a light strip configured to illuminate at least part of said peripheral edge.

Advantageously, the information unit may be configured to prepare and send to the contactless reader a message requiring the contactless reader to provide said feedback to the user.

Advantageously, the first transaction may be a payment transaction, an export of data stored in a non-volatile memory of the device, a Central Bank Digital Currency (CBDC) money transfer, a Fast Identity Online (FIDO) authentication, or an enrollment of biometric data into the proximity communication device.

Advantageously, the device may be a contactless smart card, a Near Field Communication (NFC) tag, an NFC key fob or an NFC USB (Universal Serial Bus) dongle.

Another object of the present invention is a method for managing a first transaction involving a proximity communication device and a contactless reader. The proximity communication device is devoid of electrical battery and comprises a contactless interface able to communicate through a contactless channel with the contactless reader. The proximity communication device requires a first level of power supply to conduct said first transaction. The proximity communication device assesses a power level of energy harvested by the contactless interface from an electromagnetic field generated by the contactless reader. The proximity communication device comprises an information unit configured to provide feedback to a user of the proximity communication device. Once the proximity communication device is informed that said first transaction needs to be conducted, the proximity communication device triggers the information unit to issue said feedback as long as the power level reaches said first level of power supply.

Advantageously, the proximity communication device may require a second level of power supply, different from said first level of power supply, to conduct a second transaction different from said first transaction. Once the device is informed that said second transaction needs to be conducted, the device may trigger the information unit to issue said feedback as long as the power level reaches said second level of power supply.

Advantageously, the proximity communication device may receive an informative data sent by the contactless reader during said first transaction and, then may deduce that said second transaction needs to be conducted by analyzing said informative data.

Advantageously, the proximity communication device may repeatedly assess the power level of energy harvested by the contactless interface and may disable the information unit as soon as said power level falls below a preset threshold.

Another object of the present invention is a system comprising a proximity communication device according to the invention claim and a contactless apparatus. The information unit is configured to prepare and send to the contactless apparatus a first message requiring the contactless apparatus to provide said feedback to the user and to send to the contactless apparatus a second message requiring the contactless apparatus to stop providing said feedback to the user. The detector unit is configured to repeatedly assess the power level of energy harvested by the contactless interface and to send the second message to the contactless apparatus as soon as the power level falls below a preset threshold. The contactless apparatus is configured to start providing said feedback upon receipt of said first message and to stop providing said feedback upon receipt of said second message.

Advantageously, the contactless apparatus may be a payment terminal, an access control box, a laptop, a tablet computer, or a smartphone.

### (Brief description of the drawings)

Other characteristics and advantages of the present invention will emerge more clearly from reading the following description of a number of preferred embodiments of the invention with reference to the corresponding accompanying drawings in which:
- Fig. 1 shows an exemplary flow diagram for managing a contactless transaction with a proximity communication device according to an example of the invention;
- Fig. 2 shows an exemplary of a system comprising a proximity device and an NFC phone wherein the proximity device is not placed in a correct position according to an example of the invention;
- Fig. 3 shows an exemplary of a system comprising a proximity device and an NFC phone wherein the proximity device is placed in a correct position according to an example of the invention; and
- Fig. 4 shows a diagram of architecture of a system for managing a contactless transaction according to an example of the invention.

### (Detailed description of the preferred embodiments)

The invention may apply to any type of proximity communication device. The proximity communication device may be implemented in a wide variety of form factors such as a contactless smart card, a smartwatch, or a wearable device like a ring for instance.

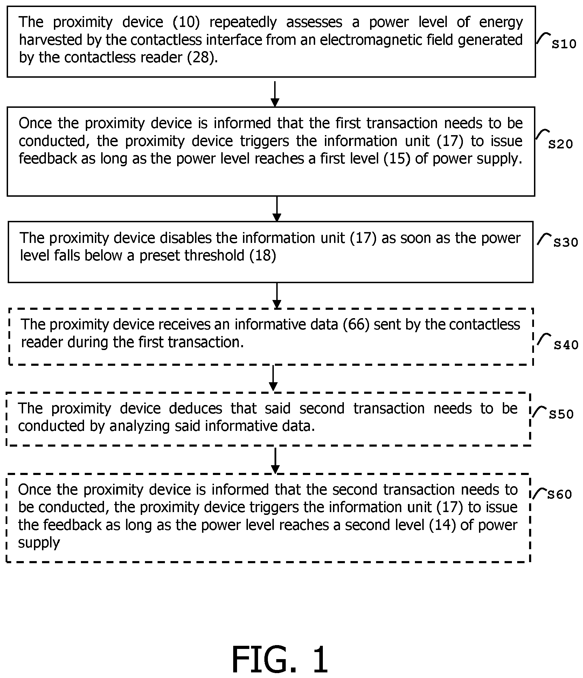

Figure 1 shows an exemplary flow diagram for managing a contactless transaction with a proximity communication device according to an example of the invention.

In this example, the proximity communication device 10 is a physical contactless banking card intended to be used by its associated genuine user 50 (i.e. bank customer or cardholder) for payment transactions or cash withdrawals.

The proximity device 10 embeds a secure element comprising a hardware processing unit, a memory storing an operating system and a banking application designed to contribute to payment services. The proximity device comprises a contactless interface 12 able to communicate through a contactless channel with a contactless reader through a contactless protocol as defined by the ISO 14443 standard or Near Field Communications (NFC) standards for instance.

In addition, the proximity device may be a dual interface device able to communicate through a contact communication protocol in addition to the contactless communication protocol.

Let us assume that the user of the proximity device 10 wants to perform a proximity transaction with a phone 20 comprising a contactless reader 28. The proximity transaction can be a payment transaction with a phone that hosts a payment application. Such a phone can be configured as a Soft-POS terminal that emulates a conventional hardware Point-of-Sale (POS) terminal.

The proximity device is assumed to have no internal electrical battery and therefore requires power from an external source.

The proximity device is configured to harvest power from the electromagnetic field generated by the contactless reader.

The proximity device 10 is assumed to require a certain level 15 of power supply to conduct the proximity transaction. This level 15 is the minimum threshold of energy necessary for the proximity device 10 to complete the intended transaction.

The power level 15 may depend on the class of the proximity device and on the type of the transaction to execute. For example, the power level 15 may be set in the range 1.65 to 5.25 Volts.

The proximity device 10 assesses the power level of energy harvested by its contactless interface 12 from the electromagnetic field generated by the contactless reader 28. (Step S10) Preferably, the proximity device 10 assesses the harvested power level according to a predefined frequency or every x milliseconds, X which can be in the range [5 milliseconds, 80 milliseconds] for example.

The proximity device 10 comprises an information unit 17 which is configured to provide feedback to the user 50 of the proximity device.

Once the proximity device is informed that the proximity transaction needs to be conducted, the proximity device 10 triggers the information unit 17 to issue the feedback 63 as long as the harvested power level reaches the first level 15 of power supply. (Step S20)
The feedback 63 informs the user that the proximity device 10 is correctly placed to harvest enough energy to complete the transaction.

Preferably, the proximity device 10 disables the information unit 17 as soon as the measured harvested power level falls below a preset threshold 18. (Step S30)
The proximity device can conduct a wide range of transaction types such as a payment transaction, an export of data stored in a non-volatile memory of the proximity device, a Central Bank Digital Currency (CBDC) money transfer, a Fast Identity Online (FIDO) authentication, or an enrollment of biometric data into the proximity communication device 10.

In some embodiments, the proximity device can be configured to control different levels/thresholds of power supply depending on the type of transaction to complete.

Thus, the proximity device can require a second level 14 of power supply to conduct another type of transaction different from the transaction requiring the first level 15 of power supply.

For the sake of simplicity, the transaction requiring the first level 15 of power supply can be called first transaction while the transaction requiring the second level 14 of power supply can be referred to as second transaction.

The second level 14 of power supply can be different from the level 15 of power supply.

Once the proximity device 10 is informed that the second transaction needs to be conducted, the proximity device triggers the information unit 17 to issue the feedback 63 as long as the harvested power level reaches the second level 14 of power supply. (Step S60)

In some embodiments, the proximity device 10 is configured to handle a unique type of transaction. In such a case, the proximity device 10 is automatically informed that the transaction needs to be conducted as soon as it detects the presence of an electromagnetic field generated by a contactless reader.

In some embodiments, the proximity device 10 is configured to handle two or more types of transaction and embeds one or more a buttons or sensors.

In such a case, the proximity device 10 can be informed that a transaction of a specific type needs to be conducted depending on the button/sensor activated by the user. Alternatively, a specific transaction type can be previously set in the proximity device as selected by default.

In some embodiments, the second transaction can be triggered by the first transaction. For example, the proximity device 10 can configured to receive (step S40) an informative data 66 sent by the contactless reader during the first transaction and, by analyzing said informative data, to deduce (step S50) that the second transaction needs to be conducted. For instance, the first transaction could be a transaction aiming at providing the contactless reader with the list of features or services available in the proximity device. For example, the second transaction could be a Central Bank Digital Currency (CBDC) money transfer.

The informative data 66 is sent through the contactless channel established between the proximity communication device 10 and the contactless reader 28.

In some embodiments, the proximity communication device 10 provides the feedback 63 directly to the user 50. The proximity device can embed a physical user interface 19 and the information unit 17 can be configured to activate the physical user interface 19 to trigger the emission of a visual, audible or vibration signal for providing directly the feedback 63 to the user.

The visual signal can be implemented through one or more diodes (like a LED) or any appropriate light sources.

The proximity device can be a smart card having a body comprising a peripheral edge and the physical user interface 19 can be a light strip configured to illuminate at least part of the peripheral edge.

In some embodiments, the proximity communication device 10 provides the feedback 63 indirectly to the user 50. The information unit 17 can be configured to prepare and send to the contactless reader a message 61 requiring the contactless apparatus (that embeds the contactless reader) to provide the feedback 63 to the user.

In some embodiments, the proximity communication device 10 can wait for enough power before sending a response to the contactless reader through the flow of a conventional contactless transaction.

In some embodiments, the proximity communication device 10 can encapsulate the feedback 63 in a response to a command (like a Select command) of the conventional flow of a contactless transaction.

In some embodiments, the proximity communication device 10 can send the feedback 63 in a response to a dedicated command specifically designed and implemented in the application hosted on the contactless reader side.

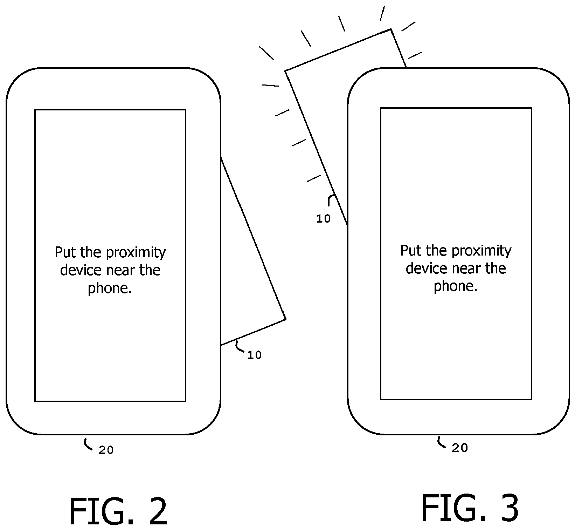

Figure 2 shows an exemplary of a system comprising a proximity communication device 10 and an NFC phone 20 hosting a contactless reader 28 wherein the proximity device is placed in an incorrect position relative to the contactless reader.

The NFC phone 20 displays a message requiring the user to put the proximity device 10 near the phone to start a transaction. In the example of Fig. 1, the proximity communication device does not get enough power from the contactless reader to conduct the transaction and the proximity communication device does not provide any feedback to the user.

Figure 3 shows the same system as that of Fig. 2, but here the proximity device is placed in a correct position according to an example of the invention. In the example of Fig. 3, the proximity communication device does get enough power from the contactless reader to conduct the transaction and the proximity communication device does provide feedback to the user by illuminating its peripheral edge.

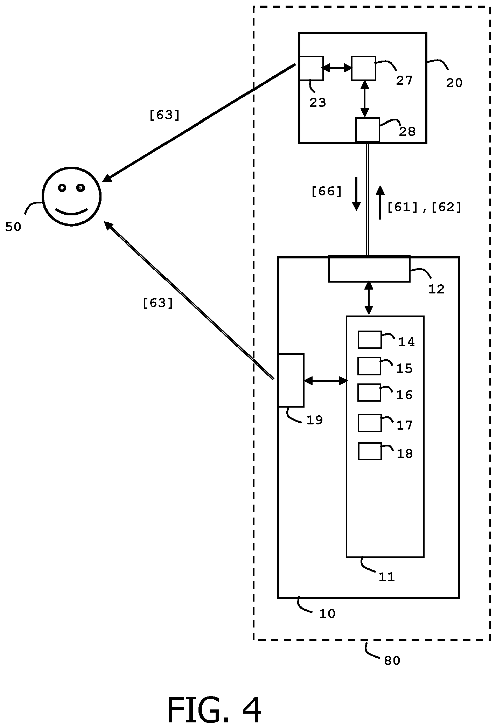

Figure 4 depicts a diagram of architecture of a system 80 for managing a contactless transaction according to an example of the invention.

In this example, the system 80 is a payment system comprising both a proximity communication device 10 and a contactless apparatus 20. The proximity communication device 10 is a payment smart card having a secure element 11 including both a hardware processor and a non-volatile memory. The payment smart card 10 is assigned to a user 50.

The smart card 10 comprises a physical communication interface 12 able to exchange data with the contactless apparatus 20 through a contactless communication channel.

The payment smart card 10 is devoid of electrical battery and needs to harvest energy from an electromagnetic field generated by an external source.

The payment smart card 10 needs a first level 15 of power supply to be able to conduct a payment transaction.

The payment smart card 10 comprises a detector unit 16 which is configured to assess the power level of energy harvested by the contactless interface 12 from the electromagnetic field generated by the contactless reader 28.

The payment smart card 10 comprises an information unit 17 designed to provide feedback 63 to the cardholder (user) 50.

Once the payment smart card is informed that the transaction needs to be conducted, the detector unit 16 is adapted to trigger the information unit 17 to issue feedback 63 as long as the power level reaches the first level 15 of power supply.

In some embodiments, the detector unit 16 can be adapted to repeatedly assess the power level of energy harvested by the contactless interface 12 and to disable the information unit 17 as soon as the measured power level falls below a preset threshold 18. The preset threshold 18 can have a value different from the value of the first level 15 of power supply.

For example, the threshold 18 may be set in the range 1.8 to 4.75 Volts.

In some embodiments, the smart card 10 embeds a physical user interface 19 and the information unit 17 is adapted to activate the physical user interface 19 to trigger the emission of direct feedback to the user 50. The physical user interface 19 can be a component able to emit a visual, audible or vibration signal for instance.

In some embodiments, the proximity device 10 can embed both red and green LEDs and be configured to light up one or more red LEDs when the preset threshold 18 is reached and to light up all red and green LEDs when the first level 15 is reached.

In some embodiments, the proximity device 10 can be configured to light up LED(s) with a small intensity when the preset threshold 18 is reached, and high intensity when the first level 15 is reached. In some embodiments, the proximity device 10 can be configured to show blinking LED(s) when the preset threshold 18 is reached and, steady LED(s) when first level 15 is reached.

Thus, as can be understood from the above-presented embodiments, the hardware user interface 19 and the feedback 63 could be different depending on assessed harvested energy compared to the preset threshold 18 and the first power level 15.

Thanks to some embodiments of the invention, the proximity communication device is able to autonomously provide appropriate feedback to the user without requiring feedback treatment by the coupled contactless apparatus.

Thanks to some embodiments of the invention, the user can be guided independently of the contactless apparatus to position the proximity device in the right place.

Preferably, the physical user interface 19 is a light strip configured to illuminate at least part of the peripheral edge of the card body. Such an embodiment allows to easily provide the feedback to the user even if a large part of the body of the proximity device is hidden by the contactless apparatus 20.

The contactless apparatus 20 may be a conventional Point-Of-Sale (POS) terminal, an Automated Teller Machine (ATM) or a phone embedding a payment application. It comprises a hardware processor (not shown), a banking application 27 able to manage financial transactions, and a contactless reader 28 adapted to exchange data with the smart card 10 in contactless mode. For instance, the contactless reader 28 may be adapted to exchange data through a communication session compliant with ISO/IEC-14443 standard or Near Field Communications (NFC) specifications.

The contactless apparatus 20 comprises a physical human interface 23 which can include a display and a keyboard for instance.

In some embodiments, the information unit 17 is designed to prepare and send to the contactless reader a message 61 that requires the contactless apparatus 20 to provide the feedback 63 to the user 50.

In some embodiments, the proximity communication device 10 can send the message 61 in a field of a response to a command of the conventional flow of a contactless transaction.

In some embodiments, the proximity communication device 10 can send the message 61 in a response to a specific (E.g. proprietary) command implemented in the application hosted on the contactless reader side.

Upon receipt of the message 61, the contactless reader 28 forwards the message 61 to the application 27 that triggers provision of the feedback 63 to the user 50 through the physical human interface 23. For instance, the physical human interface 23 may display a message like "proximity device correctly positioned", simply turn on a green light, or emit a preset audio signal to inform the user 50. In some embodiments, the physical human interface 23 may play a preset sound as long as the proximity device is not positioned in the correct place, then change the emitted audio signal when the position is correct.

In such a case, the smart card provides indirect feedback to the user through the coupled contactless apparatus 20.

In some embodiments, the information unit 17 can be adapted to prepare and send to the contactless apparatus 20 a second message 62 requiring the contactless apparatus to stop providing said feedback 63 to the user. The detector unit 16 can be configured to repeatedly assess the power level of energy harvested by the contactless interface 12 and to send the second message 62 to the contactless apparatus as soon as the power level falls below a preset threshold 18. The contactless apparatus 20 can be configured to start providing the feedback 63 upon receipt of the first message 61 and to stop providing the feedback 63 upon receipt of the second message 62.

In some embodiments, the smart card 10 may comprise a hardware user interface 19 able to directly provide information to the user 50 via a visual, audio or vibration signal. The hardware user interface 19 can include one or more a light-emitting diodes (LED). Preferably, the hardware user interface 19 is designed and arranged in such a way that it is visible around the entire perimeter of the smartcard 10, for example by emitting a signal visible through the edge of the card body or at the periphery of the upper surface of the card body. The hardware user interface 19 can include a light strip or a translucent material diffusing light in multiple directions.

In some embodiments, the smart card 10 may be able to conduct a plurality of applications and each of these applications can require a specific energy level of power supply.

A transaction (referred to as first transaction) of a first type can require the first level 15 of power supply, while a transaction (referred to as second transaction) of a second type can require a second level 14 of power supply. The second level 14 of power supply can be different from the first level 15 of power supply.

The smart card 10 can detect the type of transaction to conduct and use the relevant level of power supply to monitor the harvested energy. Once the smart card 10 is informed that the second transaction needs to be conducted, the detector unit 16 can be configured to trigger the information unit 17 to issue the feedback 63 as long as the power level reaches the second level 14 of power supply.

In some embodiments, the smart card 10 is designed to consider that the first transaction needs to be conducted as soon as the smart card 10 gets enough power supply from the surrounding electromagnetic field.

In some embodiments, the smart card 10 can be configured to receive an informative data 66 sent by the contactless reader 28 during the first transaction and, by analyzing the received informative data, to deduce that the second transaction needs to be conducted. In other words, the first transaction may trigger the start of the second transaction. Such a sequence may occur with a first transaction aiming at discovering the services provided by the card 10 and a second transaction which correspond to the service selected by the reader during the first transaction.

Other sequences can be executed, for example with a first transaction which is a CBDC money transfer and a second transaction which is consulting the digital currency balance in the CBDC wallet hosted in the proximity device 10.

Although the above-presented system 80 is a payment system, the system 80 of the Figure 4 can be another type of system. In some embodiments, the system 80 can be an access control system comprising a physical access token 10 (i.e. the proximity communication device) and an access control box 20 controlling access to a physical area.

In some embodiments, the system 80 can be a CBDC system comprising a proximity communication device 10 hosting a CBDC wallet and a contactless apparatus 20 hosting another CBDC wallet.

In some embodiments, the system 80 can be an authentication system comprising a FIDO device 10 hosting a FIDO credential (like a certificate or a secret key) and a contactless apparatus 20 hosting a FIDO compliant software application.

In some embodiments, the system 80 can be a personal system comprising an NFC phone 20 and a biometric payment card 10 able to enroll new biometric samples when energized by the NFC phone. The personal system can comprise a laptop, a tablet computer, or a Personal Digital Assistant (PDA) instead of a phone.

The invention is not limited to the described embodiments or examples. In particular, the described examples and embodiments may be combined.

The invention is not limited to payment cards and applies to any proximity devices able to communicate through a contactless channel.

Thanks to some embodiments of the invention, during a proximity payment transaction performed with a payment terminal, the cardholder of the payment device can easily and independently (i.e. without help from another person) place the payment device in the right place in relation to the payment terminal even if the user does not know the location of the contactless reader antenna in the payment terminal.

## Claims

1. A proximity communication device (10) able to conduct a first transaction with a contactless reader (28), said device being devoid of electrical battery and comprising a contactless interface (12) able to communicate through a contactless channel with the contactless reader,
said device (10) requiring a first level (15) of power supply to conduct said first transaction,
wherein the device comprises a detector unit (16) configured to assess a power level of energy harvested by the contactless interface from an electromagnetic field generated by the contactless reader,
wherein the device comprises an information unit (17) configured to provide feedback (63) to a user (50) of the device, and
wherein, once the device is informed that said first transaction needs to be conducted, the detector unit (16) is configured to trigger the information unit (17) to issue said feedback as long as the power level reaches said first level (15) of power supply.

2. The proximity communication device according to claim 1, wherein said device requires a second level (14) of power supply, different from said first level of power supply, to conduct a second transaction different from said first transaction,
wherein once the device is informed that said second transaction needs to be conducted, the detector unit (16) is configured to trigger the information unit (17) to issue said feedback as long as the power level reaches said second level (14) of power supply.

3. The proximity communication device according to claim 2, wherein the device is configured to receive an informative data (66) sent by the contactless reader during said first transaction and, by analyzing said informative data, to deduce that said second transaction needs to be conducted.

4. The proximity communication device according to claim 1, wherein the detector unit (16) is configured to repeatedly assess the power level of energy harvested by the contactless interface and to disable the information unit (17) as soon as said power level falls below a preset threshold (18).

5. The proximity communication device according to claim 1, wherein the device embeds a physical user interface (19) and wherein the information unit (17) is configured to activate the physical user interface to trigger the emission of a visual, audible or vibration signal for providing said feedback to the user.

6. The proximity communication device according to claim 5, wherein the device has a body comprising a peripheral edge and wherein the physical user interface (19) is a light strip configured to illuminate at least part of said peripheral edge.

7. The proximity communication device according to claim 1, wherein the information unit (17) is configured to prepare and send to the contactless reader a message (61) requiring the contactless reader to provide said feedback to the user.

8. The proximity communication device according to claim 1, wherein the first transaction is a payment transaction, an export of data stored in a non-volatile memory of the device, a Central Bank Digital Currency, CBDC, money transfer, a Fast Identity Online, FIDO, authentication, or an enrollment of biometric data into the proximity communication device.

9. The proximity communication device according to claim 1, wherein the device is contactless smart card, a Near Field Communication, NFC, tag, an NFC key fob or an NFC USB dongle.

10. A method for managing a first transaction involving a proximity communication device (10) and a contactless reader (28), said device being devoid of electrical battery and comprising a contactless interface (14) able to communicate through a contactless channel with the contactless reader,
said device requiring a first level (15) of power supply to conduct said first transaction,
wherein the device assesses a power level of energy harvested by the contactless interface from an electromagnetic field generated by the contactless reader,
wherein the device comprises an information unit (17) configured to provide feedback (63) to a user (50) of the device, and
wherein, once the device is informed that said first transaction needs to be conducted, the device triggers (S20) the information unit (17) to issue said feedback as long as the power level reaches said first level (15) of power supply.

11. The method according to claim 10, wherein said device requires a second level (14) of power supply, different from said first level of power supply, to conduct a second transaction different from said first transaction,
wherein once the device is informed that said second transaction needs to be conducted, the device triggers (S60) the information unit (17) to issue said feedback as long as the power level reaches said second level (14) of power supply.

12. The method according to claim 11, wherein the device receives (S40) an informative data (66) sent by the contactless reader during said first transaction and, then deduces (S50) that said second transaction needs to be conducted by analyzing said informative data.

13. The method according to claim 10, wherein the device repeatedly assesses (S10) the power level of energy harvested by the contactless interface and disables (S30) the information unit (17) as soon as said power level falls below a preset threshold (18).

14. A system (80) comprising the proximity communication device according to claim 1 and a contactless apparatus (20),
wherein the information unit (17) is configured to prepare and send to the contactless apparatus a first message (61) requiring the contactless apparatus to provide said feedback (63) to the user and to send to the contactless apparatus a second message (62) requiring the contactless apparatus to stop providing said feedback to the user,
wherein the detector unit (16) is configured to repeatedly assess the power level of energy harvested by the contactless interface and to send the second message (62) to the contactless apparatus as soon as the power level falls below a preset threshold (18), and
wherein the contactless apparatus is configured to start providing said feedback upon receipt of said first message and to stop providing said feedback upon receipt of said second message.

15. The system according to claim 14, wherein the contactless apparatus is a payment terminal, an access control box, a laptop, a tablet computer, or a smartphone.
